Europäisches Patentamt

European Patent Office

Office européen des brevets

(19)

(11) **EP 0 689 870 B1**

(12) **FASCICULE DE BREVET EUROPEEN**

(45) Date de publication et mention
de la délivrance du brevet:
**01.09.1999 Bulletin 1999/35**

(51) Int. Cl.$^6$: **B01J 23/00**, B01J 37/03,
B01J 23/34, B01J 23/76,
B01J 23/78, B01J 23/80

(21) Numéro de dépôt: **95401533.5**

(22) Date de dépôt: **27.06.1995**

(54) **Catalyseur d'oxydation résistant à des températures élevées, son procédé de préparation et procédé de combustion utilisant un tel catalyseur**

Hohe Temperatur beständiger Oxydationskatalysator seine Herstellung und Anwendung für Verbrennungsverfahren

High temperature resistant oxydation catalyst, its preparation and use in combustion processes

(84) Etats contractants désignés:
**AT CH DE DK FR LI NL SE**

(30) Priorité: **01.07.1994 FR 9408262**

(43) Date de publication de la demande:
**03.01.1996 Bulletin 1996/01**

(73) Titulaire:
**INSTITUT FRANCAIS DU PETROLE**
**92502 Rueil-Malmaison (FR)**

(72) Inventeur: **Euzen, Patrick**
**F-92500 Rueil Malmaison (FR)**

(56) Documents cités:
**EP-A- 0 044 117          EP-A- 0 089 199**
**EP-A- 0 270 203          EP-A- 0 318 808**
**EP-A- 0 554 968          EP-A- 0 573 087**

**Description**

La présente invention concerne un catalyseur d'oxydation non-sélective résistant à des températures élevées, un procédé de préparation de ce catalyseur et son utilisation dans la combustion catalytique d'hydrocarbures, de monoxyde de carbone, d'hydrogène ou de leurs mélanges.

La combustion conventionnelle, réalisée en présence d'une flamme, habituellement utilisée dans les procédés de combustion d'hydrocarbures, tel que le méthane, est un processus difficilement contrôlable. Elle se produit dans un domaine de concentrations air/hydrocarbure bien déterminé et conduit, outre à la formation de dioxyde de carbone et d'eau, à la production de polluants comme le monoxyde de carbone et les oxydes d'azote. En revanche, la combustion catalytique produit peu de polluants tels que $NO_x$ et CO. De plus, l'introduction d'un catalyseur autorise un meilleur contrôle de l'oxydation totale dans un large domaine des valeurs du rapport air/hydrocarbure. Celles-ci peuvent se situer en dehors des limites d'inflammabilité de la combustion classique. Par ailleurs, la combustion catalytique permet de brûler une très grande variété de composés.

Les catalyseurs de combustion bien connus de l'homme de l'art, sont généralement préparés à partir d'un substrat monolithique, en céramique ou en métal, sur lequel on dépose une fine couche d'un ou plusieurs oxydes réfractaires, généralement de l'alumine, de surface et de porosité supérieures à celles du substrat monolithique. Sur cet oxyde est dispersée la phase active composée essentiellement des métaux du groupe du platine.

Dans un procédé de combustion, les catalyseurs sont soumis à des températures très élevées, qui sont souvent supérieures à 1000°C. Mais, au cours de l'utilisation de tels catalyseurs à ces températures élevées, il s'avère que le catalyseur subit une dégradation qui diminue ses performances catalytiques. Parmi les causes envisagées pour cette dégradation des performances, le frittage du support ainsi que le frittage de la phase active et/ou son encapsulation par le support font partie de celles les plus couramment citées.

Afin de limiter la chute de surface spécifique du support, il a été proposé d'ajouter à l'alumine divers stabilisants au cours de la préparation. Ainsi, il est connu d'ajouter:

- un oxyde de terre rare, par exemple ainsi que décrit dans le brevet français FR-B-2 257 335 ou dans la demande de brevet français FR-A-2 596 379;

- un oxyde d'alcalino-terreux, par exemple ainsi que décrit dans les brevets français FR-B- 2 140 575 et FR-B-2 271 160.

Le lanthane et le baryum sont cités parmi les stabilisants les plus efficaces de l'alumine. Les supports stabilisés par ces techniques possèdent, pour certains, une durabilité accrue par rapport à l'alumine pure. Mais, à des températures supérieures ou égales à 1200°C exigées par un procédé de combustion, de tels supports s'avèrent toutefois présenter une stabilité au cours du temps insuffisante pour répondre à ces exigences.

Par ailleurs, il existe des supports de catalyseurs à base d'un mélange d'alumine et d'oxydes d'alcalino-terreux ou d'oxydes de terre rare dont la structure cristalline appartient à la famille des hexaaluminates lamellaires (décrite dans "Structural Inorganic Chemistry" de A.F.Wells, 5$^{ème}$ édition, CLARENDON PRESS, Oxford). Ainsi sont connus les supports suivants:

- $Ln_2O_3$/ 11~ 14-$Al_2O_3$, avec Ln= La, Nd ou Pr, par exemple, ainsi que décrit dans la demande de brevet européen EP-A- 130 835;

- $MO$-$6Al_2O_3$; avec M= Ba,Ca ou Sr,

- par exemple, ainsi que décrit dans le brevet européen EP-B- 222 471 ;

- $MgAl_{11}LnO_{19}$ ou $Mg_xAlyLn_zO_m$ avec (Ln=La, Pr ou Nd); x=0.1-10; y= 5-40; z=0.1-4; m est optionnel, par exemple, ainsi que décrit dans la demande de brevet japonais JP-A-02/126939.

Après une calcination prolongée à des températures supérieure à 1100-1200°C, ces supports de catalyseurs de combustion appartenant à la famille des hexaaluminates présentent, pour certains, une résistance au frittage supérieure aux alumines stabilisées par le lanthane ou par le baryum. Cependant, ces supports ne résolvent pas le problème de stabilité de la phase active également responsable de la dégradation des performances.

Afin de limiter le frittage de la phase métallique active, il a été proposé d'ajouter divers stabilisants à base essentiellement d'oxydes de métaux de transition. Les catalyseurs préparés par cette technique sont décrits notamment dans le brevet américain US-A- 4 857 499. Ces catalyseurs présentent, pour certains, une durabilité accrue par rapport à la phase métallique active seule. Mais en raison de la volatilité des métaux du groupe du platine et de leurs oxydes, ces catalyseurs présentent toutefois une stabilité au cours du temps insuffisante conduisant à une dégradation de l'activité.

Enfin, dans le cadre de la combustion catalytique, il existe une autre manière de contourner cette détérioration inexorable de la phase métallique : l'utilisation d'oxydes de métaux de transition. Les oxydes de métaux de transition à base de terre rares et/ou d'alcalino-terreux et de métaux de transition présentent des propriétés de résistance au frittage. Ainsi sont connus

- les pérovskites :

$$La_{(1+x)/2} Sr_{(1+x)/2} Co_{1-x}Me_xO_3, \text{ avec Me = Fe, Mn, Cr, V ou Ti,}$$

par exemple, ainsi que décrit dans la demande de brevet européen EP-A- 089 199;

- les oxydes issus d'un précurseur du type :

$$Ni_{6-z}Al_xMg_zLa_y(CO_3)_{(x+y)/2}(OH)_{12+2(x+y)}nH_2O$$

par exemple, ainsi que décrit dans la demande de brevet européen de brevet européen EP-A- 044-117.

Cependant, ces oxydes sont insufisamment résistants au frittage dans les conditions de température très sévères exigées par la combustion catalytique.

Pour rémédier à l'ensemble des problèmes, il a été ainsi proposé d'incorporer un métal de transition au sein d'un hexaaluminate, ainsi que le décrit, notamment, le brevet américain: US-A- 4788174.

Le catalyseur d'oxydation ainsi proposé est le suivant :

$$A_{1-z}C_zB_xAl_{12-y}O_{19-\alpha}$$

où A= Ba, Ca ou Sr ; C= Kou Rb avec $(0\leq z \leq 0.4)$
où B= Mn,Fe,Co,Ni, Cu ou Cr avec $(0.1\leq x \leq 4)$ et $(x \leq y \leq 2x)$.
et avec $\alpha = 1-1/2 \{X--z (X--Y) + xZ --3y\}$.

Mais le potassium et le rubidium qui exaltent l'activité catalytique sont des composés volatils. Cette volatilité conduit à une perte du gain d'activité initialement observé. En outre, ces composés volatils sont corrosifs et ils sont donc susceptibles de détériorer les réacteurs et les canalisations.

La demanderesse a découvert que l'on peut améliorer de façon surprenante l'activité catalytique de ces catalyseurs en y incorporant au moins un élément choisi parmi le magnésium et/ou le zinc tout en atténuant les inconvénients mentionnés plus haut.

La présente invention propose en effet un catalyseur d'oxydation non-sélective résistant à des températures élevées répondant essentiellement à la formule $A_{1-x}B_yC_zAl_{12-y-z}O_{19-\delta}$, dans laquelle A représente au moins un élément sélectionné dans le groupe formé par le baryum, le strontium et les terres rares; B représente au moins un élément de valence Y sélectionné dans le groupe formé par Mn, Co et Fe; C représente au moins un élément sélectionné dans le groupe formé par Mg et Zn; x ayant une valeur de 0 à 0.25, y ayant une valeur de 0.5 à 3 et z ayant une valeur de 0.01 à 3; la somme y + z ayant une valeur maximale de 4 et $\delta$ a une valeur qui, déterminée en fonction des valences X et Y respectives des éléments A et B et de la valeur de x, y et de z, est égale à $1- 1/2 \{ (1-x)X + yY --3 y - z \}$.

Selon une variante de l'invention, au moins un métal noble du groupe du platine peut être déposé à la surface du catalyseur, répondant essentiellement à la formulation $A_{1-x}B_yC_zAl_{12-y-z}O_{19-\delta}$ ou incorporé, au cours de la préparation, au catalyseur répondant essentiellement à la formulation $A_{1-x}B_yC_zAl_{12-y-z}O_{19-\delta}$. Ce métal noble est de façon préférentielle du platine et/ou du palladium et/ou du rhodium.

Selon des caractéristiques préférées du catalyseur de la présente invention, le rapport atomique de A sur la somme B + C + Al est d'environ 0.06 à 0.1 et $A_{1-x}B_yC_zAl_{12-y-z}O_{19-\delta}$ est un hexaaluminate lamellaire dans lequel l'élément B et/ou l'élément C sont incorporés au sein de la structure. Selon d'autres caractéristiques préférées du catalyseur de la présente invention, l'élément A est le lanthane ou le baryum, l'élément B est le manganèse et l'élément C est le magnésium.

Les catalyseurs selon l'invention apportent des performances améliorées spécialement dans les procédés de combustion catalytique d'hydrocarbures, de monoxyde de carbone, d'hydrogène ou de leurs mélanges. Mais ils sont également utilisables dans tous les procédés catalytiques nécessitant des températures élevées.

La présente invention concerne également un procédé de préparation d'un catalyseur d'oxydation non-sélective résistant à des températures élevées consistant à dissoudre et mélanger un composé soluble dans l'eau et/ou dans l'alcool d'aluminium, un composé soluble dans l'eau et/ou dans l'alcool d'un élément A sélectionné dans le groupe formé par le baryum, le strontium et les terres rares, un composé soluble dans l'eau et/ou dans l'alcool d'un élément B sélectionné dans le groupe formé par Mn, Co et Fe, et un composé soluble dans l'eau et/ou dans l'alcool d'un élément C sélectionné dans le groupe du magnésium et du zinc, de telle manière que le rapport atomique de A sur la somme $B + C + Al$ soit d'environ 0.06 à 0.1, que le rapport atomique de B sur la somme $B + C + Al$ soit d'environ 0.04 à 0.2 et que le rapport atomique de C sur la somme $B + C + Al$ soit d'environ 0.01 à 0.2, de manière à obtenir une solution homogène, puis à transformer cette solution homogène en un produit solide constitué d'oxyde mixte ou d'une solution solide présentant à la fois la même homogénéité et la même composition en éléments A, B, C, Al. Tous les procédés connus de l'homme du métier et permettant de transformer une solution homogène aqueuse ou non-aqueuse en un oxyde mixte (ou en solution solide) sont utilisables dans le cadre de l'invention. On peut notamment citer la coprécipitation, l'hydrolyse, le procédé sol-gel, la cryodessication, le séchage par atomisation, la complexation.etc.. Ces procédés dont la liste n'est pas limitative conduisent directement (ou indirectement avec séparation d'une phase solide intermédiaire) à l'oxyde mixte ou à la solution solide recherchée; ledit oxyde sera calciné à une température au moins égale à 900°C et pendant une durée suffisante pour que ledit oxyde mixte ou la solution solide se forme et soit détectable par diffraction des rayons X.

Préférentiellement, le catalyseur de la présente invention est obtenu par coprécipitation ou par hydrolyse des alcoxydes.

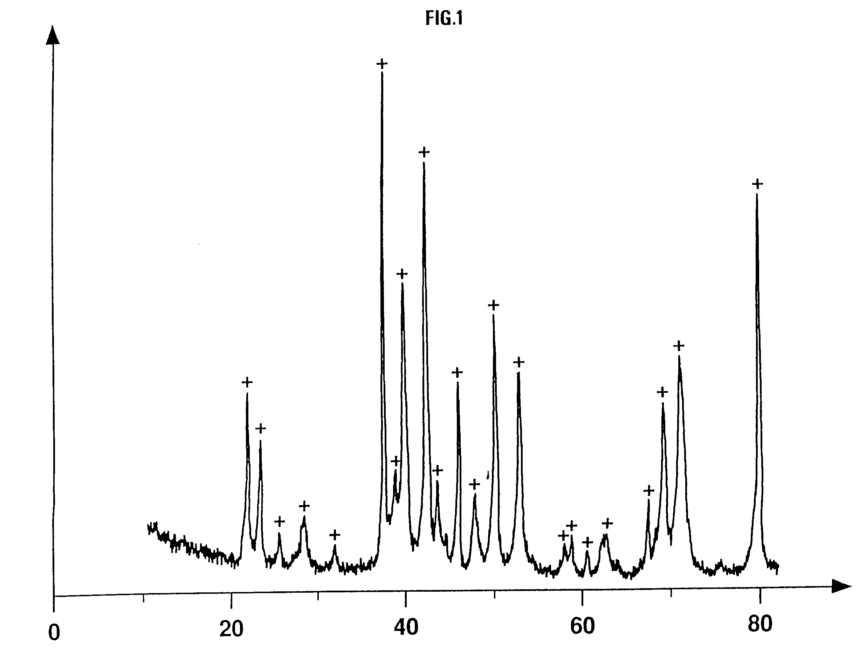

Quand le rapport atomique de A sur la somme $B + C + Al$ est de 1/12 pour les alcalino-terreux et de 1/11 à 1/14 pour les terres rares, la formulation $A_{1-x}B_yC_zAl_{12-y-z}O_{19-\delta}$ possède un maximum de stabilité thermique. Cependant, le rapport atomique de A sur la somme $B + C + Al$ n'est pas limité à ces rapports; de façon préférentielle, il est proche de ces rapports et il est d'environ 0.06 à 0.1. Cette plage de rapport préférée confère à la formulation catalytique de la présente invention: $A_{1-x}B_yC_zAl_{12-y-z}O_{19-\delta}$, ses propriétés de résistance au frittage à des températures élevées. Pour des valeurs du rapport atomique de A sur la somme $B + C + Al$ largement inférieurs à 0.06, l'alumine alpha appelée communément corindon apparaît majoritairement au cours de la calcination. Pour des valeurs du rapport atomique de A sur la somme $B + C + Al$ dépassant largement 0.1, de nouvelles structures cristallines se forment selon la nature de l'élément A: $AO-Al_2O_3$, $A_2O_3-Al_2O_3$ etc; celles-ci ne possèdent pas une résistance au frittage aussi élevée que les compositions $A_{1-x}B_yC_zAl_{12-y-z}O_{19-\delta}$ dont le rapport atomique de A sur la somme $B + C + Al$ est d'environ entre 0.06 à 0.1. En effet, $A_{1-x}B_yC_zAl_{12-y-z}O_{19-\delta}$ qui constitue la majeure partie du catalyseur de la présente invention possède une structure cristalline de type hexaaluminate lamellaire voisine ou similaire de la magnétoplumbite (par exemple, $MO-6Al_2O_3$; avec M= Ba, Ca ou Sr) et/ou de l'alumine-β et/ou de $La_2O_3/$ 11~14-$Al_2O_3$. Cette structure cristalline (figure 1) est supposée être à l'origine des propriétés de résistance thermique supérieures du catalyseur de la présente invention. Cette structure cristalline apparaît à des températures inférieures ou égales à la température de transition vers l'alumine alpha, permettant ainsi d'éviter la transition vers alpha et la chute de surface spécifique et la diminution d'activité catalytique qui en résultent.

Les éléments B et C qui sont les composants actifs du catalyseur sont fixés ou incorporés au sein la structure de type hexaaluminate lamellaire décrite précédemment. Cette incorporation ou cette fixation serait à l'origine de la bonne résistance au frittage des éléments actifs B et C et par conséquent de la bonne conservation de l'activité catalytique au cours du temps. En outre, la proximité au sein de la structure de l'hexaaluminate des deux éléments actifs B et C entraîne un effet de synergie sur l'activité catalytique. Cet effet de synergie pourrait conférer au catalyseur de la présente invention $A_{1-x}B_yC_zAl_{12-y-z}O_{19-\delta}$ son activité catalytique supérieure.

Les valeurs de y et z qui sont représentatives de la composition en éléments actifs B et C dans la formule du catalyseur de la présente invention $A_{1-x}B_yC_zAl_{12-y-z}O_{19-\delta}$ sont,de façon préférentielle, comprises respectivement entre 0.5 et 3 et entre 0.01 et 3, et de façon encore plus préférentielle comprises entre 0.5 et 2 et entre 0.01 et 2. Si les valeurs y et z sont respectivement inférieures à 0.5 et à 0.01, il n'y pas assez de composants actifs au sein de la formulation et l'activité catalytique n'est pas suffisamment élevée pour satisfaire aux exigences d'un procédé de combustion. A l'opposé, si les valeurs y et z en éléments actifs sont supérieures à 3, une majorité des composants catalytiques ne peuvent s'incorporer avantageusement au sein de la structure de type hexaaluminate lamellaire $A_{1-x}B_yC_zAl_{12-y-z}O_{19-\delta}$ et ils ne peuvent donc pas contribuer à l'activité catalytique. Ils forment une phase oxyde distincte de la formulation du catalyseur de la présente invention $A_{1-x}B_yC_zAl_{12-y-z}O_{19-\delta}$. Cette ou ces phases oxydes peuvent, pour certains cas, être distinguées du catalyseur de la présente invention $A_{1-x}B_yC_zAl_{12-y-z}O_{19-\delta}$ à l'aide de la technique de diffraction des rayons X.

$A_{1-x}B_yC_zAl_{12-y-z}O_{19-\delta}$ qui constitue la majeure partie du catalyseur de la présente invention possède une structure cristalline de type hexaaluminate lamellaire voisine ou similaire de la magnétoplumbite et/ou de l'alumine-β. On considère que cette structure cristalline est à l'origine des propriétés de résistance thermique supérieures du catalyseur de la présente invention. De façon préférentielle, au moins une partie de la formulation $A_{1-x}B_yC_zAl_{12-y-z}O_{19-\delta}$ possède une structure cristalline de type hexaaluminate lamellaire dans lequel l'élément B et/ou C est incorporé ou fixé dans la structure.

Selon une variante de l'invention, les catalyseurs peuvent, en outre, comporter un métal du groupe du platine. Ce métal du groupe du platine peut être déposé à la surface du catalyseur de la présente invention (par imprégnation, par exemple) ou encore il peut être incorporé au cours de la préparation En effet, il peut s'avérer efficace d'imprégner ou d'incorporer un métal du groupe du platine le catalyseur résistant au frittage de la présente invention afin d'améliorer son activité à basse température. Par ailleurs, en incorporant le métal du groupe du platine au cours de la préparation, on peut en outre améliorer la résistance au frittage du métal du groupe du platine. De tels catalyseurs imprégnés par un métal du groupe du platine ou contenant un métal du groupe du platine incorporé au cours de la préparation sont également inclus dans la présente invention.

La formulation $A_{1-x}B_yC_zAl_{12-y-z}O_{19-\delta}$ est constituée essentiellement d'un mélange composite de quatre oxydes: l'oxyde d'un élément A, l'oxyde d'un élément B, l'oxyde d'un élément C et l'oxyde d'aluminium. On décrit plus précisément ces différents types d'oxydes ci-dessous.

En tant que précurseur de l'aluminium qui constitue l'élément majoritaire pour obtenir le catalyseur résistant à des températures élevées de la présente invention, il est préférable d'utiliser une alumine appartenant au groupe des alumines de transition et des hydrates d'alumine: alumines gamma, boemite, gibbsite, bayerite, etc... quand on procède par une méthode traditionnelle de réaction entre poudres à l'état solide. Quand, pour obtenir le catalyseur résistant à des températures élevées de la présente invention, on procède par une technique de coprécipitation, il est préférable d'utiliser un composé soluble de l'aluminium tel que le nitrate d'aluminium, le sulfate d'aluminium, le chlorure d'aluminium, etc... Quand, pour obtenir le catalyseur résistant à des températures élevées de la présente invention, on procède par hydrolyse d'un composé organique, il est préférable d'utiliser un composé soluble de l'aluminium tel que par exemple un alcoxyde d'aluminium.

En tant que précurseur de l'élément B et/ou C qui sont essentiellement responsables de l'activité catalytique de la formulation, on peut utiliser un composé solide (oxyde, hydroxyde, carbonate, hydroxycarbonate ou encore sel insoluble) ou un composé soluble (nitrate, sulfate, chlorure, ou alcoxyde) selon la technique envisagée. En tant qu'élément B du catalyseur de la présente invention, il est préférable d'utiliser Mn, Fe et/ou Co et plus préférentiellement Mn et/ou Co. En tant qu'élément C, Mg est préférentiellement utilisé.

En fonction de ces différents précurseurs de l'aluminium, du manganèse et du magnésium, différentes méthodes de préparation des catalyseurs ou de supports de catalyseurs peuvent être utilisées: réaction à l'état solide, complexation, hydrolyse d'alcoxydes, coprécipitation, imprégnation ou sol-gel.

L'invention propose de mettre en forme ces formulations sous forme de monolithes, de billes, tablettes, d'extrudés ou d'autres formes communément utilisées pour les catalyseurs et les supports de catalyseurs.

L'invention propose également d'utiliser ces catalyseurs déposés sur divers substrats céramiques ou métalliques. Ces substrats peuvent être des monolithes à structure cellulaire en céramique ou métallique (enroulement, empilement de feuillards métalliques ou encore association de fibres métalliques ou de fils métalliques sous la forme d'un monolithe à structure fibreuse). La céramique employée peut être de la mullite, de la cordierite, de l'alumine $\alpha$, de la zircone, du titanate d'alumine, du carbure de silicium, du nitrure de silicium ou leurs mélanges. Les alliages métalliques employés doivent présenter de préférence des propriétés réfractaires. Ils peuvent par exemple être composés de fer, chrome, d'aluminium et de cérium ou d'yttrium tels que l'acier Gilphal 135 de la société Imphy. Le substrat métallique peut être préalablement soumis à un traitement oxydant à une température comprise entre 700°C et 1200°C, de préférence entre 800 et 1000°C.

La préparation de ces catalyseurs déposés sur un substrat consiste en une étape d'enduction au cours de laquelle le substrat est plongé dans une suspension contenant les précurseurs des composants du catalyseur, puis est séché et calciné après évacuation de l'excès de ladite suspension.

Généralement, le procédé de préparation de ces catalyseurs comprend une ou plusieurs étapes intermédiaires et/ou finales de calcination qui transforment les précurseurs du catalyseur en catalyseur de la présente invention.

Pour obtenir le catalyseur de la présente invention, il est préférable de calciner à une température supérieure ou égale à 900°C. Lorsque la calcination est menée à une température inférieure à 900°C, les précurseurs ne se transforment pas en l'oxyde désiré au cours d'une durée raisonnable d'un point de vue pratique. D'après les spectres de diffraction X (figure 1) des catalyseurs de la présente invention, la structure cristalline du composé obtenu peut être soit amorphe soit proche de celle d'un hexaaluminate lamellaire. Cette structure cristalline est dépendante des conditions de calcinations et plus particulièrement de la température et de la durée de calcination. Notamment, la structure cristalline du catalyseur de la présente invention est d'autant plus proche de la structure cristalline d'un hexaaluminate lamellaire que la température de calcination est élevée. Cependant, pour des températures supérieures ou égales à 1500°C, la surface spécifique de l'hexaaluminate obtenu tend à diminuer fortement en raison de la croissance cristalline du matériau accélérée à cette température. Il est donc nécessaire d'adapter les conditions de calcination choisies avec la surface spécifique désirée afin d'obtenir le catalyseur de la présente invention avec une surface spécifique compatible avec un procédé de combustion catalytique.

Les conditions de calcination sont choisies en fonction des conditions d'utilisation du catalyseur. Par exemple, dans un procédé de combustion catalytique à haute température, le catalyseur est soumis à des températures supérieures ou égales à 1300°C. Il est donc préférable de calciner au préalable à une température supérieure ou égale à 1300°C afin de limiter dans la mesure du possible les modifications du catalyseur pouvant intervenir au cours de son utilisation. A de telles températures, les supports de catalyseurs conventionnels de type alumine ou améliorés de type alumines dopées par une terre rare et/ou un alcalino-terreux se transforment en alumine alpha. Cette transformation en alumine alpha s'accompagne d'une chute drastique de la surface spécifique et par conséquent d'une forte baisse de l'activité catalytique.

Pour obtenir le catalyseur de la présente invention, il est préférable de calciner à une température supérieure ou égale à 900°C. Les conditions de calcination: température et durée dépendent principalement de la température maximale d'utilisation du catalyseur. Les conditions préférées de calcination se situant entre plus d'une heure à 1000°C à moins d'une heure à 1400°C.

Différentes méthodes de préparation des catalyseurs ou de supports de catalyseurs peuvent être utilisés telles que réactions entre poudres à l'état solide, hydrolyse d'alcoxydes, complexation, coprécipitation, imprégnation, procédé sol-gel...

Le catalyseur d'oxydation non-sélective résistant à des températures élevées de la présente invention peut être préparé à partir d'un mélange de poudres de pigments solides (oxydes, hydroxydes, carbonates, hydroxycarbonates ou encore sels insolubles), mais plus préférentiellement il est obtenu par un procédé consistant à dissoudre et à mélanger un composé d'aluminium soluble dans l'eau et/ou dans l'alcool, un composé soluble dans l'eau et/ou dans l'alcool d'un élément A sélectionné dans le groupe formé par le baryum, le strontium et les terres rares, un composé soluble dans l'eau et/ou dans l'alcool d'un élément B sélectionné dans le groupe formé par Mn, Co et Fe, et un composé soluble dans l'eau et/ou dans l'alcool d'un élément C sélectionné dans le groupe formé par Mg et Zn, de telle manière que le rapport atomique de A sur la somme $B + C + Al$ soit d'environ 0.06 à 0.1, que le rapport atomique de B sur la somme $B + C + Al$ soit d'environ 0.04 à 0.2 et que le rapport atomique de C sur la somme $B + C + Al$ soit d'environ 0.01 à 0.2, à obtenir une précipitation, une hydrolyse et/ou une décomposition thermique conduisant à la formation d'un produit dans la solution, à extraire ce produit de la solution, à précalciner le produit extrait entre 200°C et 600°C et à calciner le produit à une température au moins supérieure à 900°C. Parmi les méthodes citées ci-dessus, la coprécipitation et l'hydrolyse des alcoxydes sont préférentiellement utilisées. Bien que l'explication détaillée suivante traite plus spécifiquement de la coprécipitation, l'hydrolyse des alcoxydes pourrait tout aussi bien s'y appliquer. De même, dans ce qui suit, le lanthane, le manganèse et le magnésium ont été choisis pour illustrer le procédé de préparation, cependant les autres éléments pouvaient tout aussi bien l'illustrer.

Le catalyseur de la présente invention est préférentiellement préparé de la façon suivante. Dans une première phase, on prépare un mélange contenant un sel d'aluminium soluble dans l'eau, un sel de lanthane soluble dans l'eau, un sel de manganèse soluble dans l'eau et un sel de magnésium soluble dans l'eau. Dans une deuxième phase, on réalise la coprécipitation des hydroxydes des sels solubles utilisés dans la première phase. La coprécipitation peut être effectuée en ajoutant à la solution l'agent précipitant ou inversement en ajoutant le mélange des sels solubles dans l'agent précipitant. D'une façon préférée, la précipitation sera conduite en conditions stationnaires, la solution contenant les sels solubles et celle contenant l'agent précipitant étant ajoutés simultanément, leurs débits étant asservis au pH mesuré, dans un réacteur dit "à surverse" où la précipitation se produit. Cette coprécipitation est menée dans une plage de pH qui permet une coprécipitation complète de tous les constituants précurseurs du catalyseur de la présente invention. Dans l'exemple étudié, cette précipitation est menée à un pH compris entre 7 et 12. Il se forme, outre les hydroxydes des précurseurs de Mn, La, Al et Mg qui précipitent, des composés indésirables qui sont éliminés par filtration et/ou simple lavage à l'eau. Ensuite, le coprécipité est séché et précalciné entre 200°C et 650°C, puis le produit obtenu est calciné à une température comprise entre 900°C et 1500°C durant 5 à 30 heures afin de le transformer en catalyseur de la présente invention.

Comme composés solubles de l'aluminium que l'on peut mettre en oeuvre, on citera notamment le nitrate d'aluminium, le chlorure d'aluminium, etc. Comme composés solubles de manganèse que l'on peut mettre en oeuvre, on citera notamment le nitrate de manganèse, le chlorure de manganèse, etc. Comme composés solubles du lanthane que l'on peut mettre en oeuvre, on citera notamment le nitrate de lanthane, le chlorure de lanthane etc. En tant que composés solubles du magnésium que l'on peut mettre en oeuvre, on citera notamment le nitrate de magnésium, le chlorure de magnésium etc. Comme agents précipitants, l'hydroxyde de sodium, le carbonate de sodium, la potasse et l'ammoniaque peuvent être utilisés. Les agents précipitants sont choisis de telle manière que l'ensemble des précurseurs du catalyseur de la présente invention soient précipités ensemble. Il peut être parfois nécessaire d'utiliser un mélange d'agents coprécipitants: hydroxyde de sodium + carbonate de sodium, par exemple, afin de obtenir une coprécipitation de tous les précurseurs. Ainsi, dans le cas d'un catalyseur de la présente invention contenant du strontium et du baryum, il est préférable que le mélange d'agents coprécipitants contienne du carbonate de sodium. On propose également de réaliser des précipitations séparées des différents précurseurs, puis mélanger ensemble les produits obtenus afin d'obtenir le précurseur du catalyseur de la présente invention.

Par ailleurs, ces catalyseurs mis en oeuvre selon la présente invention peuvent avoir avantageusement été traités ainsi qu'il est bien connu de l'homme de l'art par des agents porogènes tels que ceux à base de cellulose, naphtaline, gommes naturelles, polymères synthétiques de façon à leur conférer des propriétés de porosité désirée.

On considère que la structure cristalline voisine ou appartenant à la famille des hexaaluminates lamellaires dans lequel l'élément B et/ou l'élément C sont incorporés au sein de la structure serait à l'origine des propriétés de résistance thermique supérieures du catalyseur de la présente invention. Par ailleurs, l'élément C qui exalte l'activité catalytique ne se transforme pas en composé volatil et reste incorporé au sein de la structure assurant ainsi une stabilité des propriétés catalytiques au cours du temps.

Les catalyseurs selon l'invention apportent des performances améliorées spécialement dans les procédés de combustion catalytique d'hydrocarbures tels que du méthane, de monoxyde de carbone, d'hydrogène ou de leurs mélanges. Mais ils sont également utilisables dans tous les procédés catalytiques nécessitant des températures élevées.

Par ailleurs, les réacteurs de combustion catalytique peuvent comporter un ou plsusieurs étages catalytiques. En général, les catalyseurs de la première zone catalytique dont le rôle consiste essentiellement à initier la réaction de combustion sont des catalyseurs à base de métaux nobles sur alumine stabilisée. Le stabilisant de l'alumine étant choisi généralement parmi les alcalino-terreux, les terres rares, la silice ou l'étain. Les catalyseurs de la présente invention peuvent être utilisés dans de tels réacteurs de combustion et de façon préférentielle ils peuvent être utilisés dans un ou plusieurs étages catalytiques dont la température d'entrée des gaz est comprise entre 600°C et 900°C et dont la température de sortie des gaz est comprise entre 800°C et 1500°C.

Les exemples suivants illustrent l'invention sans toutefois la limiter:

Les divers précurseurs employés sont des produits commerciaux de PROLABO.

La structure cristalline des catalyseurs a été déterminée par diffraction des rayons X (PHILIPS PW 1050). Leur composition élémentaire a été déterminée par fluorescence X (PHILIPS PW 1480).

Le pouvoir d'oxydoréduction des catalyseurs, qui est directement corrélé à son activité catalytique, a été mesuré par thermodésorption d'oxygène et par oxydation en température programmée ($\chi$-SORB-VINCI Technologies).

Les surfaces spécifiques ont été mesurées par la méthode standard BET ($\Phi$-SORB-VINCI Technologies).

La figure 1 représente le spectre de diffraction X du catalyseur (C1) selon l'invention après calcination sous air à 1200°C durant 16 heures. Les (+) désignent les pics correspondant au catalyseur (C1).

La figure 2 représente le spectre de diffraction X du catalyseur (C2) comparatif après calcination sous air à 1200°C durant 16 heures. Les ($\alpha$) désignent les pics correspondant à l'alumine.

La figure 3 représente l'évolution du volume d'oxygène désorbé par le catalyseur (C1) (en $cm^3$ d'oxygène par gramme de catalyseur) en fonction de la température au cours de la thermodésorption.

La figure 4 représente l'évolution du volume d'oxygène consommé par le catalyseur (C1) (en $cm^3$ d'oxygène par gramme de catalyseur) en fonction de la température au cours de l'oxydation en température programmée.

La figure 5 représente l'évolution du volume d'oxygène désorbé par le catalyseur (C4) (en $cm^3$ d'oxygène par gramme de catalyseur) en fonction de la température au cours de la thermodésorption.

La figure 6 représente l'évolution du volume d'oxygène consommé par le catalyseur (C4) (en $cm^3$ d'oxygène par gramme de catalyseur) en fonction de la température au cours de l'oxydation en température programmée.

Les figures 7 et 8 représentent les spectre de diffraction des rayons X des catalyseurs (C13) et (C14) comparatif après calcination sous air à 1200°C durant 16 heures.

**EXEMPLE 1 :** préparation d'un catalyseur (C1) selon l'invention.

Dans de l'eau désionisée, on verse du nitrate d'aluminium $Al(NO_3)_3,9H_2O$, du nitrate de lanthane $La(NO_3)_3$, du nitrate de manganèse $Mn(NO_3)_2,4H_2O$ et du nitrate de magnésium $Mg(NO_3)_2,6H_2O$ jusqu'à dissolution complète des cristaux, puis on prolonge l'agitation pendant 1 heure de manière à homogénéiser le mélange. On opère ensuite une coprécipitation des hydroxydes à l'ammoniaque de manière à obtenir un pH de l'ensemble égal à 9. Le précipité obtenu est filtré et lavé à l'eau distillé de manière à éliminer l'ammoniaque en excès et le nitrate d'ammonium résultant de la précipitation. Le gâteau de filtration est séché à l'étuve durant 12 heures à 120°C, puis est calciné sous air dans un creuset en alumine à 600°C durant quatre heures, puis à 1200°C sous air durant seize heures.

On obtient un catalyseur (C1) dont le rapport Mg/Al est 0.0838 et dont le rapport Mn/Al est de 0.0872.

La composition du catalyseur (C1) peut être représenté par la formule $La_{0.78}Mg_{0.9}Mn_{0.9}Al_{11}O_{19-\delta}$.

La figure 1 montre que le catalyseur (C1) présente les raies caractéristiques d'un hexaaluminate dans lequel Mn et Mg sont incorporés dans la structure. On n'observe pas la formation d'alumine alpha.

La surface BET du catalyseur (C1) est de l'ordre de 17 $m^2/g$.

**EXEMPLE 2** (comparatif) : Préparation d'un catalyseur (C2) selon l'art antérieur.

Afin de montrer la stabilité supérieure du catalyseur (C1) par rapport à une alumine stabilisée par le lanthane, on a préparé un catalyseur (C2) de façon strictement similaire à celle de l'exemple 1 donné ci-dessus sans magnésium ni manganèse avec une teneur moindre en lanthane.

On obtient un catalyseur (C2) dont le rapport La/Al est 0.026.

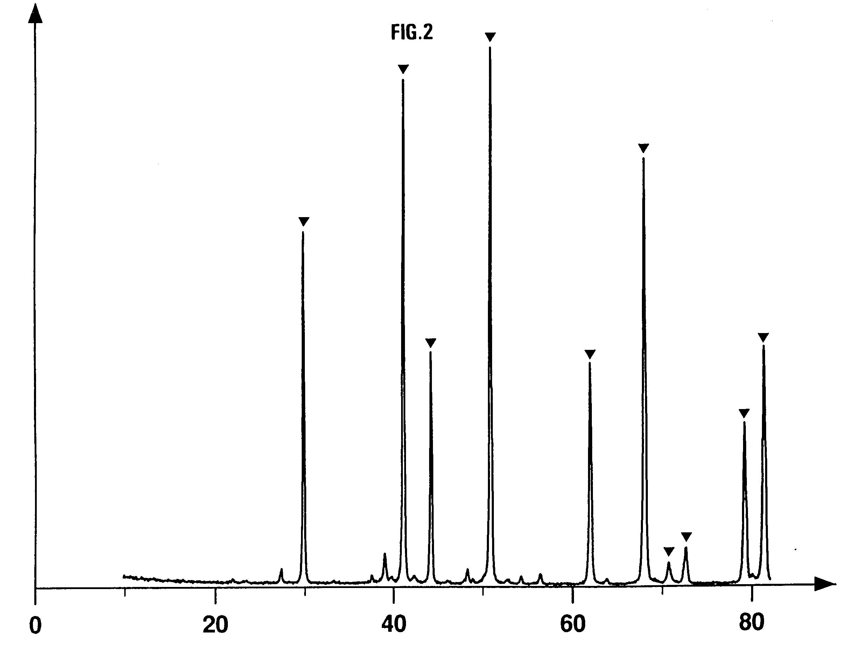

La figure 2 montre que le catalyseur (C2) s'est transformé de façon majoritaire en alumine alpha de faible surface spécifique. Les autres raies minoritaires dans le diagramme de diffraction X sont celles de la pérovskite $LaAlO_3$ et de $LaAl_{11}O_{18}$.

La surface BET du catalyseur (C2) est de l'ordre de 5 $m^2/g$.

La comparaison des figures 1 et 2 établit clairement la stabilité thermique supérieure du catalyseur (C1) dans des conditions de température sévères par rapport aux alumines stabilisés de l'art antérieur.

**EXEMPLE 3** (comparatif) : Préparation d'un catalyseur (C3) selon l'art antérieur.

Afin de montrer l'effet du magnésium et du manganèse sur l'activité catalytique du catalyseur (C1), on a préparé un catalyseur (C3) de façon strictement similaire à celle de l'exemple 1 donné ci-dessus avec pour seule différence l'absence de magnésium et de manganèse dans la formulation.

On obtient un catalyseur (C3) dont le rapport La/Al est 0.071.

**EXEMPLE 4** (comparatif) : Préparation d'un catalyseur (C4) selon l'art antérieur.

Afin de montrer l'effet du magnésium sur l'activité catalytique du catalyseur (C1), on a préparé un catalyseur (C4) de façon strictement similaire à celle de l'exemple 1 donné ci-dessus avec pour seule différence l'absence de magnésium dans la formulation.

On obtient un catalyseur (C4) dont le rapport Mn/Al est 0.0714 et dont le rapport La/Al est égal à 0.077.

**EXEMPLE 5 :** Activité catalytique des divers catalyseurs mesurées par thermodésorption et par oxydation en température programmée.

Le présent exemple rassemble les résultats obtenus en thermodésorption (TDO) et en oxydation en température programmée (TPO) avec les catalyseurs (C1), (C2), (C3) et (C4) décrits respectivement dans les exemples 1, 2, 3 et 4.

Les essais ont été effectués en chargeant successivement 10 g de chacun des catalyseurs dans l'appareillage de TDO/TPO.

La procédure adoptée pour la thermodésorption est la suivante. L'échantillon calciné à 1200°C durant seize heures est porté à 1000°C à une vitesse de 20°C/mn sous un courant d'hélium circulant à 20$cm^3$ /mn. On mesure le volume d'oxygène désorbé entre 400°C et 1000°C par le catalyseur en $cm^3$ d'oxygène par gramme de catalyseur.

La procédure adoptée pour l'oxydation en température programmée est la suivante. A la suite de la thermodésorption, l'échantillon est refroidi sous hélium jusqu'à la température ambiante. Puis, l'échantillon est porté à 1000°C à une vitesse de 5°C/mn sous un courant d'hélium + 2% d'oxygène circulant à 20$cm^3$ /mn. On mesure le volume d'oxygène consommé entre 400°C et 1000°C par le catalyseur en $cm^3$ d'oxygène par gramme de catalyseur.

Le tableau ci-après rassemble les résultats obtenus dans une plage de température permettant de bien différencier les catalyseurs du point de vue de leur aptitude à fonctionner dans un procédé de combustion à haute température.

| Numéro de l'exemple | Référence du catalyseur | Rapport atomique Mn/Al | Rapport atomique Mg/Al | Rapport atomique La/Al | SBET (m²/g) | TDO V₁ (cc/g) 400-1000°C | TPO V₂ (cc/g) 400-1000°C |
|---|---|---|---|---|---|---|---|
| Exemple 1 selon l'invention | (C1) | 0.0872 | 0.0838 | 0.071 | 17 | 1.146 | 1.164 |
| Exemple 2 (comparatif) | (C2) | 0.0 | 0.0 | 0.026 | 6 | 0.0 | 0.0 |
| Exemple 3 (comparatif) | (C3) | 0.0 | 0.0 | 0.071 | 22 | 0.0 | 0.0 |
| Exemple 4 (comparatif) | (C4) | 0.071 | 0.0 | 0.077 | 13 | 0.566 | 0.07 |

Tableau 1 : Caractéristiques physico-chimiques du catalyseur déterminées par fluorescence X, volume d'oxygène désorbé par gramme de catalyseur au cours de la thermodésorption (TDO) et volume d'oxygène (TPO) consommé par gramme de catalyseur au cours de l'oxydation en température programmée

Le catalyseur (C3) ne désorbe pas d'oxygène contrairement au catalyseur (C1) selon l'invention et le catalyseur (C3) n'est pas capable de consommer de l'oxygène après une thermodésorption contrairement au catalyseur (C1) selon l'invention.

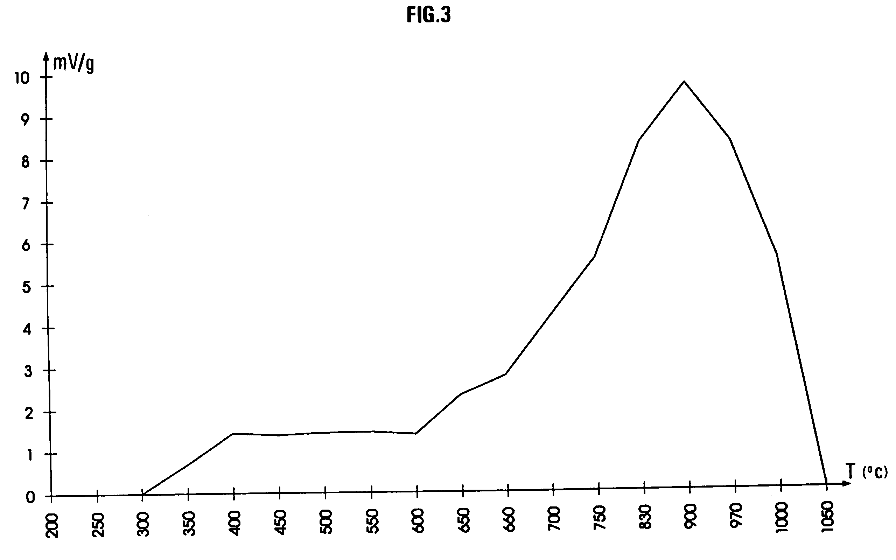

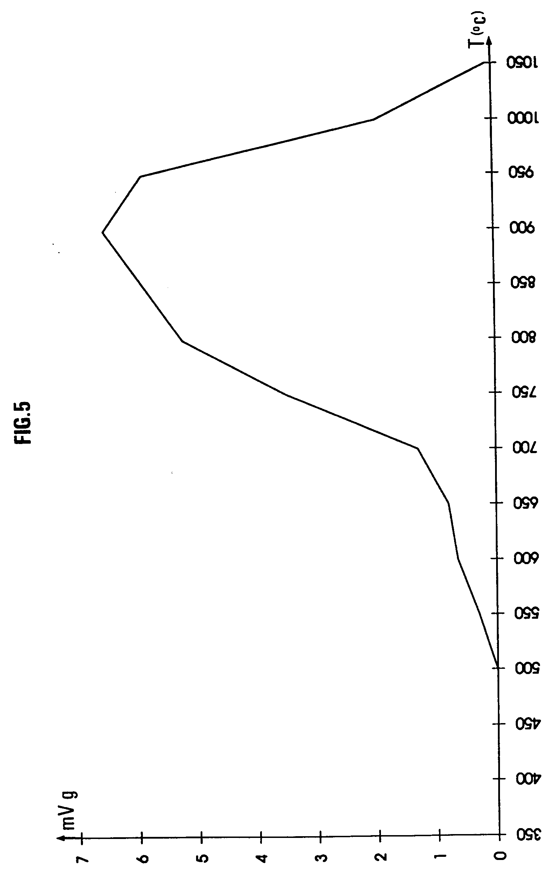

La comparaison des figures 3 et 5 montre le catalyseur (C4) désorbe bien moins d'oxygène que le catalyseur (C1) selon l'invention.

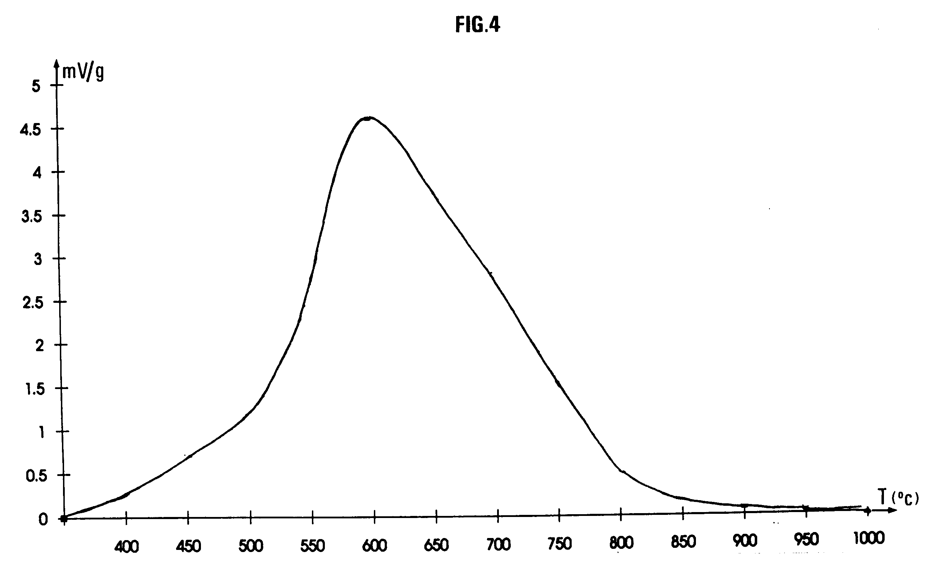

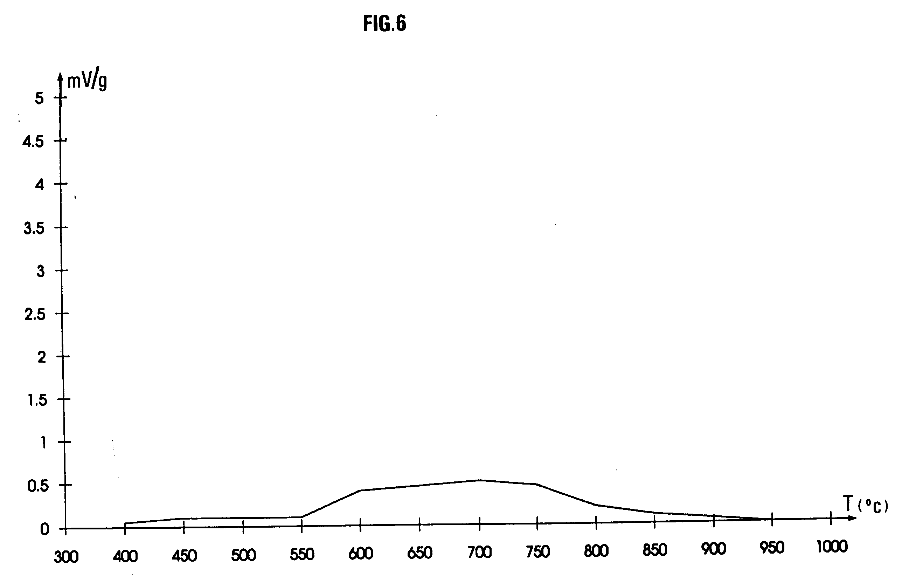

La comparaison des figures 4 et 6 montre que le catalyseur (C4) n'est pas capable de consommer de l'oxygène contrairement au catalyseur (C1) selon l'invention.

Les formulations (C1), (C3) et (C4) sont destinées à fonctionner dans un procédé de combustion et plus particulièrement dans un deuxième étage catalytique. Or, il est démontré que le potentiel catalytique de telles formulations est directement relié à leur capacité d'oxydoréduction. Les comparaisons ci-dessus établissent clairement la supériorité du catalyseur (C1) par rapport aux catalyseurs (C3) et (C4) de l'art antérieur.

**EXEMPLE 6** : Préparation d'un catalyseur (C5) selon l'invention.

Dans de l'eau désionisée, on verse du nitrate d'aluminium $Al(NO_3)_3,9H_2O$, de l'acétate de barium $Ba(O_2C_2H_5)_2$, du nitrate de manganèse $Mn(NO_3)_2,4H_2O$ et du nitrate de magnésium $Mg(NO_3)_2,6H_2O$ jusqu'à dissolution complète des cristaux, puis on prolonge l'agitation pendant 1 heure de manière à homogénéiser le mélange. On opère ensuite, a température constante comprise entre 20 et 100°C, une coprécipitation au carbonate d'ammonium de manière à obtenir un pH de l'ensemble égal à 9. Le précipité obtenu est filtré et lavé à l'eau distillé de manière à éliminer le carbonate d'ammonium en excès et le nitrate d'ammonium résultant de la précipitation. Le gâteau de filtration est séché à l'étuve durant 12 heures à 120°C, puis il est calciné sous air dans un creuset en alumine à 600°C durant quatre heures, puis à 1200°C sous air durant seize heures.

On obtient un catalyseur (C5) dont la composition est $BaMnMgAl_{10}O_{19-\delta}$. La surface BET du catalyseur (C5) est de l'ordre de 15 m²/g.

On prépare une suspension d'enduction à partir de deux litres d'eau déionisée additionnée de la poudre du catalyseur (C5). Cette suspension est broyée de telle manière que la taille des particules soit inférieure à 10 microns.

Un monolithe céramique (cordiérite) de 0,84 litre présentant 62 cellules par cm² est immergé dans la suspension, puis égoutté avant que l'excès de suspension soit éliminé par soufflage. Le support est ensuite séché puis calciné dans un four dont la température est maintenue à 600°C pendant deux heures. Ces étapes d'immersion, soufflage et calcination sont répétées une deuxième fois afin de déposer l'équivalent de 120g du catalyseur (C5) par litre de substrat.

**EXEMPLES 7-8 :** Préparation de catalyseurs (C6) et (C7) selon l'invention

Afin de montrer la nécessité d'avoir un certaine quantité de magnésium et de manganèse dans le catalyseur, on prépare deux catalyseurs (C6) et (C7), selon la méthode décrite dans l'exemple 6, en faisant varier les proportions de manganèse et de magnésium. On obtient un catalyseur (C6) dont la composition est $BaMnMg_{0.5}Al_{10.5}O_{19-\delta}$ et un catalyseur (C7) dont la composition est $BaMn_{0.5}Mg_{0.5}Al_{11}O_{19-\delta}$. La surface BET de ces catalyseurs est de l'ordre de $15 \ m^2/g$.
On prépare deux monolithes enduits respectivement d'un catalyseur (C6) et (C7) selon la méthode décrite dans l'exemple 6.

**EXEMPLE 9** (comparatif) : Préparation d'un catalyseur (C8)

Afin de montrer l'effet couplé du magnésium et du manganèse sur l'activité catalytique du catalyseur (C5), on prépare un catalyseur (C8) de façon strictement similaire à celle de l'exemple 6 donné ci-dessus avec pour seule différence l'absence de manganèse dans la formulation. La composition de ce catalyseur (C8) est $BaMgAl_{11}O_{19-\delta}$. On prépare un monolithe enduit d'un catalyseur (C8) selon la méthode décrite dans l'exemple 6.

**EXEMPLES 10 et 11** (comparatif) : Préparation des catalyseurs (C9) et (C10)

Afin de montrer l'effet couplé du magnésium et du manganèse sur l'activité catalytique du catalyseur (C5), les catalyseurs (C9) et (C10) sont préparés selon la méthode décrite dans l'exemple 4 du brevet européen EP-0270-203-B1 à partir d'une solution d'alcool isopropylique d'alkoxyde de baryum, d'isopropoxyde d'aluminium et d'une solution aqueuse de nitrate de manganèse. On obtient un catalyseur (C9) dont la composition est $BaMnAl_{11}O_{19-\delta}$ et un catalyseur (C10) dont la composition est $BaMn_2Al_{10}O_{19-\delta}$. La surface BET de ces catalyseurs est de l'ordre de $15 \ m^2/g$.

**EXEMPLE 12** (comparatif) : Préparation d'un catalyseur (C11)

En substituant le baryum par le strontium, on prépare un catalyseur (C11) selon la méthode décrite dans l'exemple 6. On obtient un catalyseur (C11) dont la composition est $SrMnAl_{11}O_{19-\delta}$. La surface BET de ce catalyseur est de l'ordre de $15 \ m^2/g$.
On prépare un monolithe enduit d'un catalyseur (C11) selon la méthode décrite dans l'exemple 6.

**EXEMPLE 13**: Activité catalytique des catalyseurs (C5) à (C11)

Les performances des catalyseurs sont comparés pour la réaction de combustion du méthane, principal constituant du gaz naturel.
Dans les catalyseurs préparés (C5) à (C11), on découpe des cylindres de 1,5 cm de diamètre et de 5 cm de long, dans le sens longitudinal des canaux. Par analyse des spectres de diffraction X, on montre que la poudre de la couche d'enduction est identique à la poudre initiale.
Les tests sont réalisés dans un réacteur de laboratoire comportant un tube dans lequel est introduit le catalyseur. Ce tube est placé au centre d'un four cylindrique pouvant être porté à une température de 1500°C. Un mélange air-méthane à 3,5 % en volume de méthane est préparé à l'aide de régulateurs de débit massique et envoyé à l'entrée du réacteur. Le mélange réactionnel est porté, à la vitesse de 5°C/min de 250°C à 875°C. Le débit horaire des gaz est 50 000 fois supérieur au volume du substrat (VVH= 50 000h$^{-1}$). La concentration en méthane à l'entrée et à la sortie du réacteur est déterminée à l'aide d'un détecteur à ionisation de flamme (analyseur JUM engineering modèle FID 3-300). La conversion en méthane est le rapport en pourcentage entre la différence de concentration en méthane entre l'entrée et la sortie et la concentration en entrée.
Le tableau 2 rassemble les compositions des catalyseurs (C5) à (C11) et les températures nécessaire pour obtenir 10%, 50% et 90% de conversion du méthane introduit dans le réacteur. Le tableau 2 montre clairement l'effet de synergie entre le manganèse et le magnésium qui conduit à une meilleure activité catalytique pour les catalyseurs préparés selon l'invention.

| Numéro de l'exemple | Référence du catalyseur | Composition | T (Conversion%) | | |
|---|---|---|---|---|---|
| | | | T(10%) | T(50%) | T(90%) |
| Exemple 6 selon l'invention | (C5) | $BaMnMgAl_{10}O_{19-\delta}$ | 634 | 669 | 682 |
| Exemple 7 selon l'invention | (C6) | $BaMnMg_{0.5}Al_{10.5}O_{19-\delta}$ | 677 | 683 | 684 |
| Exemple 8 selon l'invention | (C7) | $BaMn_{0.5}Mg_{0.5}Al_{11}O_{19-\delta}$ | 686 | 716 | 717 |
| Exemple 9 (comparatif) | (C8) | $BaMgAl_{11}O_{19-\delta}$ | >875 | >875 | >875 |
| Exemple 10 (comparatif) | (C9) | $BaMnAl_{11}O_{19-\delta}$ | 671 | 699 | 700 |
| Exemple 11 (comparatif) | (C10) | $BaMn_2Al_{11}O_{19-\delta}$ | 696 | 718 | 720 |
| Exemple 12 (comparatif) | (C11) | $SrMnAl_{11}O_{19-\delta}$ | 707 | 728 | 729 |

Tableau 2 : Composition des catalyseurs (C5) à (C11) et conversions de ces catalyseurs

Le catalyseur (C5) contenant à la fois du manganèse et du magnésium présentent des températures de conversion (10%, 50% et 90%) inférieures à celles des catalyseurs (C9) et (C10) de l'art antérieur contenant uniquement du manganèse et à celles du catalyseur (C8) contenant uniquement du magnésium. L'effet de synergie du magnésium et du manganèse est clairement établi par ces comparaisons.
Le catalyseur (C5) présente des températures de conversion (10%, 50% et 90%) inférieures à celles des catalyseurs (C6) et (C7) contenant moins de manganèse et de magnésium. Une certaine quantité de magnésium et de manganèse est donc nécessaire pour obtenir une activité catalytique élevée.

**EXEMPLES 14 à 17** (comparatifs) : Préparation des catalyseurs (C12) à (C15)

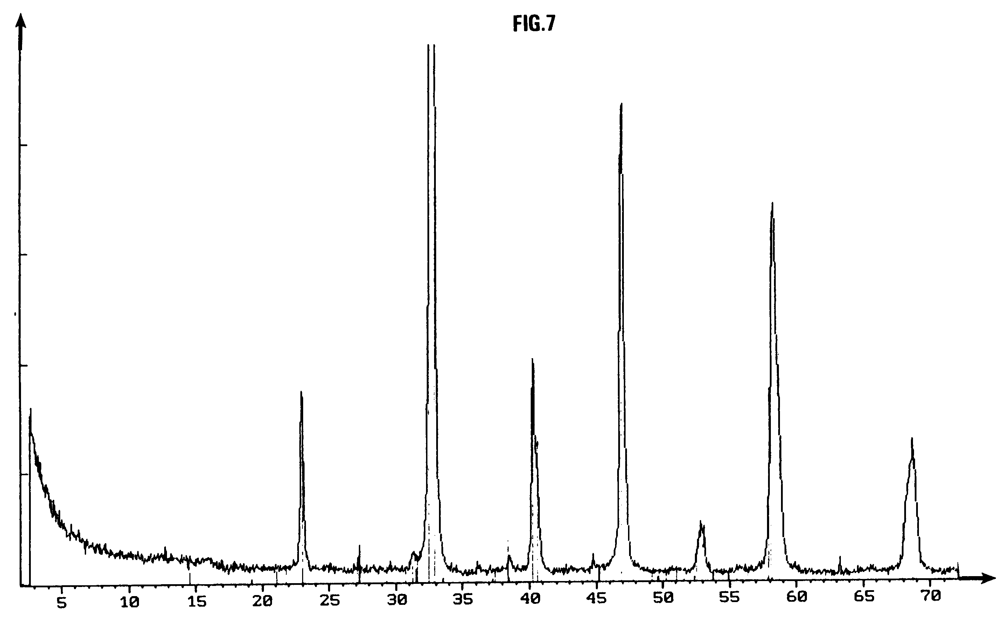

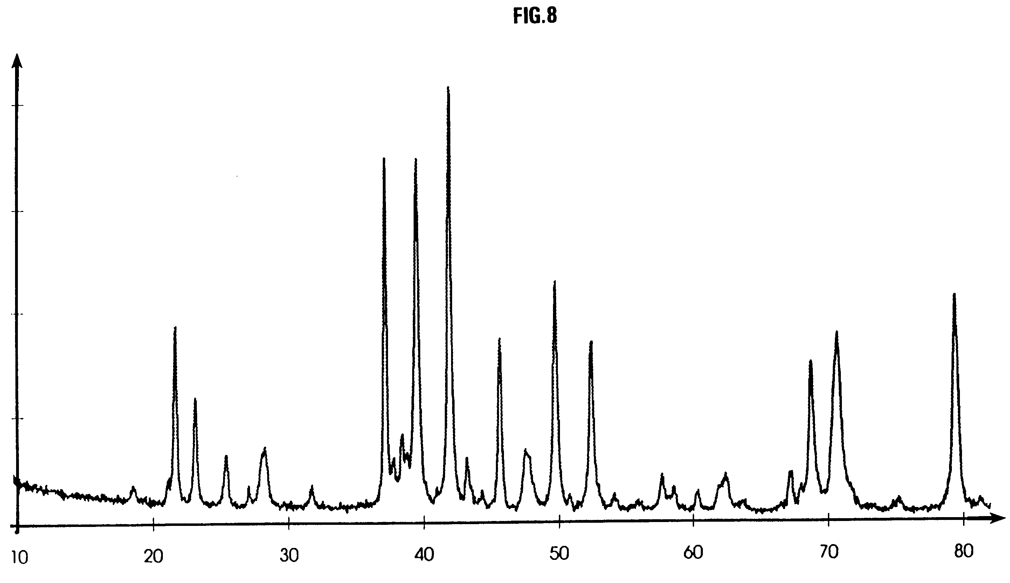

Afin de montrer la nécessité d'obtenir une structure de type hexaaluminate lamellaire où le magnésium et le manganèse sont incorporés dans la structure, on a préparé quatre catalyseurs (C12), (C13), (C14) et (C15).
Le catalyseur (C12) est préparé selon la méthode décrite dans l'exemple 1 de la demande de brevet européen EP-A-089-199 à partir d'un mélange d'oxydes de lanthane et de manganèse. On obtient un catalyseur (C12) dont la composition est $LaMnO_3$. La figure 7 montre que le catalyseur (C12) présente les raies caractéristiques d'une structure pérovskite $LaMnO_3$. On n'observe pas la formation de structure de type hexaaluminate $LaMnAl_{11}O_{18-\delta}$.
Le catalyseur (C13) est préparé selon la méthode décrite dans l'exemple 1. On obtient un catalyseur (C13) dont la composition est $LaMgAl_{10}O_{18-\delta}$. La figure 8 montre que le catalyseur (C13) présente les raies caractéristiques d'une structure de type hexaaluminate.
On prépare un catalyseur (C14) en mélangeant intimement le catalyseur (C12) et (C13), ce mélange est ensuite porté à 1200°C durant seize heures afin de favoriser la réaction à l'état solide.
On prépare également selon la méthode décrite dans l'exemple 1 de la demande de brevet européen EP-A- 044-117, un précurseur du type $Mn_5AlLaMg(CO_3)(OH)_{16}$. $nH_2O$. Ce précurseur aurait une structure similaire au minerai "pyroaurite" selon M.R.GELSTHORPE, B.C.LIPPENS, J.R.H.ROSS et R.M.SAMBROOK, dans Proc. 9th, IberoAmer. Symposium on Catalysis. Lisbonne, 1984, Volume 2, pages 1082-1091. La calcination de ce composé conduit à la formation de phases séparées comprenant des oxydes simples tels que $Mn_3O_4$ et $Al_2O_3$ et des oxydes mixtes tels que $Mn_2AlO_4$,

$MgAl_2O_4$ et $LaAlO_3$, qui constituent le catalyseur (C15).

**EXEMPLE 18:** Activité catalytique des catalyseurs (C1) et (C12) à (C15).

On prépare cinq monolithes respectivement enduits d'un catalyseur (C1), (C12), (C13), (C14) et (C15) selon la méthode décrite dans l'exemple 6. Dans les catalyseurs préparés (C12) à (C15), on découpe des cylindres de 1,5 cm de diamètre et de 5 cm de long, dans le sens longitudinal des canaux. L'activité catalytique est mesurée selon la procédure décrite dans l'exemple 13.

| Numéro de l'exemple | Référence du catalyseur | Composition | T (°C)(Conversion%) | | |
|---|---|---|---|---|---|
| | | | T(10%) | T(50%) | T(90%) |
| Exemple 1 | C1 | $La_{0.78}Mg_{0.9}Mn_{0.9}Al_{11}O_{19-\delta}$ | 675 | 680 | 685 |
| Exemple 14 (comparatif) | C12 | $LaMnO_3$ | >875 | >875 | >875 |
| Exemple 15 (comparatif) | C13 | $LaMgAl_{10}O_{19-\delta}$ | >875 | >875 | >875 |
| Exemple 16 (comparatif) | C14 | $LaMgAl_{10}O_{19-\delta} - LaMnO_3$ (co-malaxage) | >875 | >875 | >875 |
| Exemple 17 (comparatif) | C15 | Mélange d'oxydes | >875 | >875 | >875 |

Tableau 3: Composition des catalyseurs C11 à C13 et conversions de ces catalyseurs

Le catalyseur (C12) de structure pérovskite ne possède d'activité catalytique contrairement au catalyseur (C1) selon l'invention. Le catalyseur (C13) de structure hexaaluminate ne possède d'activité catalytique contrairement au catalyseur (C1) selon l'invention. Le catalyseur (C14), obtenu par mélange mécanique d'un catalyseur de structure pérovskite et d'un catalyseur de structure hexaaluminate, ne possède d'activité catalytique contrairement au catalyseur (C1) selon l'invention. Enfin, le catalyseur (C15) ne possède pas d'activité catalytique contrairement au catalyseur (C1) selon l'invention.

Le tableau 3 montre clairement la nécessité d'avoir les deux éléments actifs manganèse et magnésium intimement liés dans la structure de type hexaaluminate pour obtenir l'activité catalytique.

## Revendications

1. Catalyseur d'oxydation non-sélective résistant à des températures élevées consistant essentiellement en une formule $A_{1-x}B_yC_zAl_{12-y-z}O_{19-\delta}$, dans laquelle A représente au moins un élément sélectionné dans le groupe formé par le baryum, le strontium et les terres rares; B représente au moins un élément de valence Y sélectionné dans le groupe formé par Mn, Co et Fe; C représente au moins un élément sélectionné dans le groupe formé par Mg et Zn; x ayant une valeur de 0 à 0.25, y ayant une valeur de 0.5 à 3 et z ayant une valeur de 0.01 à 3; la somme y + z ayant une valeur maximale de 4 et $\delta$ a une valeur qui, déterminée en fonction des valences X et Y respectives des éléments A et B et de la valeur de x, y et de z, est égale à 1-1/2 { (1-x)X + yY --3 y - z } .

2. Catalyseur selon la revendication 1 et caractérisé en ce que le rapport atomique de A sur la somme B + C + Al est d'environ 0.06 à 0.1.

3. Catalyseur selon les revendications 1 et 2 caractérisé en ce que l'élément A est préférentiellement le lanthane ou le baryum, l'élément B est le manganèse et l'élément C est le magnésium.

4. Catalyseur selon les revendications 1 à 3 caractérisé en ce que les valeurs de y et z sont comprises respectivement entre 0.5 et 2 et entre 0.01 et 2.

5. Catalyseur selon les revendications 1 à 4 caractérisé en ce que la formulation $A_{1-x}B_yC_zAl_{12-y-z}O_{19-\delta}$ est un hexaaluminate lamellaire dans lequel l'élément B et/ou l'élément C sont incorporés au sein de la structure.

6. Catalyseur selon les revendications 1 à 5, caractérisé en ce que la surface spécifique est comprise entre 10 et 100 $m^2$/g après calcination à 1200°C.

7. Catalyseur selon l'une des revendications 1 à 6, caractérisé en ce que la formulation $A_{1-x}B_yC_zAl_{12-y-z}O_{19-\delta}$ est supportée sur un substrat métallique ou céramique.

8. Catalyseur selon les revendications 1 à 7 dans lequel le substrat est un matériau de forme monolithique à structure cellulaire.

9. Catalyseur selon les revendications 1 à 8, caractérisé en ce que la formulation $A_{1-x}B_yC_zAl_{12-y-z}O_{19-\delta}$ est mise sous forme monolithique à structure cellulaire.

10. Catalyseur selon la revendication 1 à 9 caractérisé en ce qu'il contient un métal noble du groupe du platine à la surface du catalyseur ou incorporé au catalyseur au cours de la préparation.

11. Procédé de préparation d'un catalyseur d'oxydation non-sélective résistant à des températures élevées selon l'une des revendications 1 à 10 consistant à dissoudre et mélanger un composé d'aluminium soluble dans l'eau et/ou dans l'alcool, un composé soluble dans l'eau et/ou dans l'alcool d'un élément A sélectionné dans le groupe formé par le baryum, le strontium et les terres rares, un composé soluble dans l'eau et/ou dans l'alcool d'un élément B sélectionné dans le groupe formé par Mn, Co et Fe, et un composé soluble dans l'eau et/ou dans l'alcool d'un élément C sélectionné dans le groupe du magnésium et du zinc, de telle manière que le rapport atomique de A sur la somme B + C + Al soit d'environ 0.06 à 0.1, que le rapport atomique de B sur la somme B + C + Al soit d'environ 0.04 à 0.2 et que le rapport atomique de C sur la somme B + C + Al soit d'environ 0.01 à 0.2, à obtenir une précipitation, une hydrolyse et/ou une décomposition thermique conduisant à la formation d'un produit dans la solution, à extraire le produit de la solution et à calciner ce produit extrait à une température au moins supérieure à 900°C.

12. Un procédé de préparation selon la revendication 11, caractérisé en ce que l'on opère par coprécipitation selon les étapes qui suivent : (a) on prépare un mélange contenant un sel d'aluminium soluble dans l'eau, un sel soluble dans l'eau d'au moins un élément A, un sel soluble dans l'eau d'au moins un élément B, et un sel soluble dans l'eau d'au moins un élément C; (b) on réalise la coprécipitation des hydroxydes ou des carbonates des sels solubles utilisés dans (a); (c) le coprécipité est séché et précalciné entre 200°C et 650°C et (d) le produit obtenu est calciné à une température comprise entre 900°C et 1500°C durant 5 à 30 heures.

13. Un procédé de préparation selon les revendications 11 et 12, caractérisé en ce que l'élément A est le lanthane ou le baryum, l'élément B est le manganèse et l'élément C est le magnésium.

14. Utilisation du catalyseur selon l'une des revendications 1 à 10 pour réaliser la combustion d'hydrocarbures, de monoxyde de carbone, d'hydrogène ou de leurs mélanges.

15. Procédé de combustion en deux zones catalytiques caractérisé en ce que le catalyseur de la première zone catalytique comprend du palladium et/ou du platine sur une alumine stabilisée par au moins un élément choisi dans le groupe composé par le baryum, le lanthane, la silice et l'étain et que le catalyseur de la deuxième zone catalytique est un catalyseur selon l'une revendications 1 à 10 ou un catalyseur préparé par un procédé selon l'une des revendications 11 à 13.

## Claims

1. A non-selective high temperature resistant oxidation catalyst mainly with formula $A_{1-x}B_yC_zAl_{12-y-z}O_{19-\delta}$, where A represents at least one element selected from the group formed by barium, strontium and the rare earths; B represents at least one element with valency Y selected from the group formed by Mn, Co and Fe; C represents at least one element selected from the group formed by Mg and Zn; x has a value of 0 to 0.25, y has a value of 0.5 to 3 and z has a value of 0.01 to 3; the sum y + z has a maximum value or 4 and $\delta$ has a value which is determined as a function of the respective valencies X and Y of elements A and B and the value of x, y and z and is equal to

$1 - \frac{1}{2}\{(1-x)X + 1\,yY - 3y - z\}$.

2. A catalyst according to claim 1, characterised in that the atomic ratio of A over the sum $B + C + Al$ of about 0.66 to 0.1.

3. A catalyst according to claim 1 or claim 2, characterised in that element A is preferably lantnanum or barium, element B is manganese and element C is magnesium.

4. A catalyst according to any one of claims 1 to 3, characterised in that the values of y and z are respectively between 0.5 and 2 and between 0.01 and 2.

5. A catalyst according to any one of claims 1 to 4, characterised in that formulation $A_{1-x}B_yC_zAl_{12-y-z}O_{19-\delta}$ is a lamellar hexaaluminate in which element B and/or element C are incorporated into the structure.

6. A catalyst according to any one of claims 1 to 5, characterised in that the specific surface area is between 10 and 100 $m^2/g$ after calcining at 1200°C.

7. A catalyst according to any one of claims 1 to 6, characterised in that formulation $A_{1-x}B_yC_zAl_{12-y-z}O_{19-\delta}$ is supported on a metallic or ceramic substrate.

8. A catalyst according to any one of claims 1 to 7, characterised in that the substrate is a monolithic material with a cellular structure.

9. A catalyst according to any one of claims 1 to 8, characterised in that formulation $A_{1-x}B_yC_zAl_{12-y-z}O_{19-\delta}$ is formed into a monolithic material with a cellular structure.

10. A catalyst according to any one of claims 1 to 9, characterised in that it contains a precious metal from the platinum group on the catalyst surface or incorporated into the catalyst during preparation.

11. A process for the preparation of a non selective high temperature resistant catalyst, consisting of dissolving and mixing a water and/or alcohol-soluble aluminium compound, a water and/or alcohol-soluble compound of an element A selected from the group formed by barium, strontium and the rare earths, a water and/or alcohol-soluble compound of an element B selected from the group formed by Mn, Co and Fe, and a water and/or alcohol-soluble compound of an element C selected from the group formed by magnesium and zinc, such that the atomic ratio of A over the sum $B + C + Al$ is about 0.06 to 0.1, the atomic ratio of B over the sum $B + C + Al$ is about 0.04 to 0.2, and the atomic ratio of C over the sum $B + C + Al$ is about 0.01 to 0.2, precipitating, hydrolysing and/or thermal decomposing to form a product in the solution, extracting the product from the solution and calcining the extracted product at a temperature greater than at least 900°C.

12. A preparation process according to claim 11, characterised in that co-precipitation is carried out using the following steps: (a) preparing a mixture containing a water soluble aluminium salt, a water soluble salt of at least one element A, a water soluble salt of at least one element B, and a water soluble salt of at least one element C; (b) carrying out co-precipitation of the hydroxides or carbonates of the soluble salts used in (a); (c) drying the co-precipitate and pre-calcining between 200°C and 650°C, and (d) calcining the product obtained at a temperature of between 900°C and 1500°C for 5 to 30 hours.

13. A preparation process according to claim 11 or claim 12, characterised in that element A is lanthanum or barium, element B is manganese and element C is magnesium.

14. Use of a catalyst according to any one of claims 1 to 10 to carry out combustion of hydrocarbons, carbon monoxide, hydrogen or mixtures thereof.

15. A combustion process using two catalytic zones, characterised in that the catalyst in the first catalytic zone comprises palladium and/or platinum on an alumina stabilised by at least one element selected from the group composed of barium, lanthanum, silicon and tin and in that the catalyst in the second catalytic zone is a catalyst according to any one of claims 1 to 10 or a catalyst prepared by a process as claimed in any one of claims 11 to 13.

# EP 0 689 870 B1

**Patentansprüche**

1. Bei hohen Temperaturen beständiger Katalysator für die nicht-selektive Oxidation, der hauptsächlich aus der Formel $A_{1-x}B_yC_zAl_{12-y-z}O_{19-\delta}$ besteht, in der

   A mindestens ein Element darstellt, das aus der Gruppe, die von Baryum, Strontium und den Seltenerden gebildet wird, ausgesucht wird;
   B mindestens ein Element mit der Wertigkeit Y darstellt, das aus der Gruppe, die aus Mn, Co und Fe gebildet wird, ausgesucht wird;
   C mindestens ein Element darstellt, das aus der Gruppe, die aus Mg und Zn gebildet wird, ausgesucht wird; wobei x einen Wert von 0 bis 0,25, y einen Wert von 0,5 bis 3 und z einen Wert von 0,01 bis 3 aufweist; die Summe y + z einen maximalen Wert von 4, und $\delta$ einen Wert hat, der in Abhängigkeit der jeweiligen Wertigkeiten X und Y der Elemente A und B und des Wertes von x, y und z festgesetzt wird und gleich 1-1/2 {(1-x)X + yY - 3y - z} ist.

2. Katalysator nach Anspruch 1 dadurch gekennzeichnet, dass das Atomverhältnis von A zur Summe B + C + Al etwa 0,06 bis 0,1 beträgt.

3. Katalysator nach den Ansprüchen 1 und 2 dadurch gekennzeichnet, dass das Element A vorzugsweise Lanthan oder Baryum ist, das Element B Mangan und das Element C Magnesium.

4. Katalysator nach den Ansprüchen 1 bis 3 dadurch gekennzeichnet, dass die Werte von y und z jeweils zwischen 0,5 und 2 und zwischen 0,01 und 2 liegen.

5. Katalysator nach den Ansprüchen 1 bis 4 dadurch gekennzeichnet, dass die Formel $A_{1-x}B_yC_zAl_{12-y-z}O_{19-\delta}$ ein Lamellenhexaaluminat ist, in dem das Element B und/oder das Element C im Gefüge eingebaut sind.

6. Katalysator nach den Ansprüchen 1 bis 5 dadurch gekennzeichnet, dass die Oberflächenkennzahl nach dem Brennen bei 1.200°C zwischen 10 und 100 $m^2$/g beträgt.

7. Katalysator nach einem der Ansprüche 1 bis 6 dadurch gekennzeichnet, dass die Formel $A_{1-x}B_yC_zAl_{12-y-z}O_{19-\delta}$ durch ein Metall- oder Keramiksubstrat getragen wird.

8. Katalysator nach den Ansprüchen 1 bis 7, in dem das Substrat ein Material monolitischer Art mit Zellengefüge ist.

9. Katalysator nach den Ansprüchen 1 bis 8 dadurch gekennzeichnet, dass der Formel $A_{1-x}B_yC_zAl_{12-y-z}O_{19-\delta}$ eine monolitische Form mit Zellengefüge gegeben wird

10. Katalysator nach den Ansprüchen 1 bis 5 dadurch gekennzeichnet, dass er einen Edelmetall aus der Platingruppe enthält, der sich an der Katalysatoroberfläche befindet oder während der präparativen Arbeiten in den Katalysator eingebaut wurde.

11. Herstellungsverfahren für einen bei hohen Temperaturen beständigen Katalysator für die nicht-selektive Oxidation nach einem der Ansprüche 1 bis 10, das darin besteht, eine wasser- und/oder alkohollösliche Aluminiumverbindung, eine wasser- und/oder alkohollösliche Verbindung eines Elements A, das aus der Gruppe, bestehend aus Baryum, Strontium, den Seltenerden, ausgesucht wurde, eine wasser- und/oder alkohollösliche Verbindung eines Elements B, das aus der Gruppe, bestehend aus Mn, Co und Fe, gewählt wurde, und eine wasser- und/oder alkohollösliche Verbindung eines Elements C, das aus der Gruppe, bestehend aus Magnesium und Zink, ausgesucht wurde, zu lösen und zu mischen, so dass das Atomverhältnis von A zur Summe B + C + Al etwa 0,06 bis 0,1, das Atomverhältnis von B zur Summe B + C + Al etwa 0,04 bis 0,2 und das Atomverhältnis von C zur Summe B + C + Al etwa 0,01 bis 0,2 beträgt, so dass eine Fällung, eine Hydrolyse und/oder eine thermische Zersetzung stattfindet, die zur Bildung eines Produktes in der Lösung führt, so dass das Produkt aus der Lösung extrahiert und dieses extrahierte Produkt bei einer Temperatur von mindestens über 900°C gebrannt wird.

12. Herstellungsverfahren nach Anspruch 11, dadurch gekennzeichnet, dass eine mehrfache Fällung in folgenden Stufen erfolgt: (a) Es wird ein Gemisch vorbereitet, das ein wasserlösliches Aluminiumsalz, ein wasserlösliches Salz von mindestens einem Element A, ein wasserlösliches Salz von mindestens einem Element B und ein wasserlösliches Salz von mindestens einem Element C enthält; (b) die Hydroxide oder die Carbonate der in (a) eingesetzten

15

löslichen Salze werden zusammengefällt; (c) das aus der Fällung resultierende Produkt wird getrocknet und zwischen 200°C und 650°C vorgebrannt; (d) das erhaltene Produkt wird 5 bis 30 Stunden bei einer Temperatur von zwischen 900°C und 1.500°C gebrannt.

13. Ein Herstellungsverfahren nach den Ansprüchen 11 und 12, dadurch gekennzeichnet, dass das Element A Lanthan oder Baryum ist, das Element B Mangan und das Element C Magnesium.

14. Einsatz des Katalysators nach einem der Ansprüche 1 bis 10, um die Verbrennung von Kohlenwasserstoffen, Kohlenmonoxid, Wasserstoffmonoxid oder von ihren Gemischen durchzuführen.

15. Verbrennungsverfahren in zwei katalytischen Bereichen, dadurch gekennzeichnet, dass der Katalysator im ersten katalytischen Bereich Palladium und/oder Platin auf einem Aluminiumoxid enthält, welches durch mindestens ein Element, das aus der Gruppe, bestehend aus Baryum, Lanthan, Kieselsäureanhydrid und Zinn, ausgesucht wird, stabilisiert wird, und dass der Katalysator im zweiten katalytischen Bereich ein Katalysator nach einem der Ansprüche 1 bis 10 oder ein Katalysator ist, der nach dem Verfahren der Ansprüche 11 bis 13 hergestellt wird.

FIG.1

EP 0 689 870 B1

FIG.2

EP 0 689 870 B1

18

**FIG.3**

FIG.4

EP 0 689 870 B1

**FIG.5**

EP 0 689 870 B1

EP 0 689 870 B1

**FIG.6**

FIG.7

FIG.8